# EUROPEAN PATENT SPECIFICATION

(11) **EP 1 515 995 B1**
(45) Date of publication and mention of the grant of the patent: **05.05.2010**
(21) Application number: 02740154.6
(22) Date of filing: 19.06.2002
(51) Int. Cl.: C08F 10/00, C08F 4/656

(54) **SOLID CATALYST COMPONENT FOR POLYMERIZATION AND COPOLYMERIZATION OF ETHYLENE, AND, PROCESS FOR OBTAINING THE SAME**
FESTER KATALYSATORBESTANDTEIL ZUR POLYMERISATION UND COPOLYMERISATION VON ETHYLEN, VERFAHREN ZU DESSEN HERSTELLUNG
COMPOSANT CATALYSEUR SOLIDE DESTINE A LA POLYMERISATION ET A LA COPOLYMERISATION D'ETHYLENE, ET PROCEDE D'OBTENTION ASSOCIE

(43) Date of publication of application: 23.03.2005
(73) Proprietor: Braskem S.A., 42810-000 Camaçari, BA (BR)
(72) Inventor: BRAGANCA, Antonio, Luiz, Duarte, 90470-040 Porto Alegre, RS (BR); MIRANDA, Marcia, Silva, Lacerda, 91330-320 Porto Alegre, RS (BR); dos Santos SILVEIRA, Leandro, Bairro So Luis, 92420-290 Canoas, RS (BR); AMORIM, Richard Faraco, 90110-020 Porto Alegre, RS (BR)
(74) Representative: Wibbelmann, Jobst
(86) International application number: PCT/BR2002/000086
(87) International publication number: WO 2004/000893

(56) References cited:
- EP-A- 0 045 885
- EP-A- 0 240 254
- EP-A- 0 408 750
- EP-A- 0 480 435
- EP-A- 0 522 651
- WO-A-91/08239
- US-A- 5 585 317

## Description

### TECHNICAL FIELD

The present invention relates to a process for obtaining a solid catalyst component for ethylene polymerization and copolymerization, and a solid catalyst component obtainable by said process.

The catalyst component obtained is especially suitable for the production of homo- and copolymers of ethylene as narrow molecular weight distribution high density polyethylene and linear low density polyethylene with controlled morphology and improved properties.

### BACKGROUND OF THE INVENTION

### 1) Polymerization Process

The slurry or gas phase processes for the production of HDPE or LLDPE operating with low bulk density polymer need reactors with large volumes in order to obtain the necessary residence time. Particularly, in the gas phase reactors the presence of fines with low bulk density causes troubles. In fact, due to the friction of the polymer particles present into the reactor the fines are especially prone to the formation of electrostatic charges and tend to deposit and adhere to the metallic walls. These stagnant deposits does not allow the exchange of the reaction heat and become hot spots, which can form layer of agglomerates containing eventually melt polymer. After some time chunks of agglomerates can fall down and plug the product discharge system. The described effects are enhanced when the reaction is carried out with a highly active catalyst.

In the U.S. Pat. No. 5.410.002 a summary of patents on the above described phenomena is presented.

Therefore, it is crucial for the process that the catalyst used enables a total control of the polymer morphology resulting in product grains without fines, with high bulk density and good flowing properties.

Another very important aspect is that the catalyst must have a slow decaying time to permit the use of reactors in series. This arrangement makes possible the obtainment of bimodal products in addition the reduction of the total volume of reaction for the same production basis. Moreover, process operation with a different condition of reaction in at least two reactors in series, turns possible the use of catalysts with higher particle size thereby minimizing the formation of electrostatic charges.

### 2) Polymer Structure

The catalyst properties are fundamental to the polymer structure, mainly in respect of the molecular weight distribution, comonomer insertion in the polymeric chain and soluble content.

Each application used to achieve a final product from high density polyethylene (HDPE) or linear low density polyethylene (LLDPE) requires a specific polymeric structure.

To obtain a film with improved optical and mechanical properties and avid blocking problems, a polymer having narrow molecular weight distribution (MFR < 27), is required. A large quantity of LLDPE applications requires products with density = 0.918 and MI = 0.7, and in most cases a xylene soluble content < 10% is desired. Indeed, when the xylene soluble content of the polymer is present in a high concentration (> 10%) and with a low molecular weight, this soluble tends to migrate to the film surface causing blocking, in addition to the unsatisfactory optical properties (low gloss and high haze).

### 3) Ziegler-Natta polyethylene catalyst

Due to the strong competition existent in the polyethylene market, the catalyst production cost is a fundamental component. Therefore it is mandatory that the catalyst for producing polyethylene be manufactured by a simple route, from low cost raw material, without generating gaseous, liquid or solid effluents hard to treat.

The patent US 5.188.997 describes a synthesis process for Ziegler-Natta catalysts from silica and magnesium chloride alcoholate. The results reported demonstrate that this catalyst produces a polymer with low bulk density (0.23 to 0.30 g/ml) and with an intermediate molecular weight distribution (MFR 30.0 to 37.8).

The patent US 5.585.317 describes the synthesis of a catalyst supported on a magnesium chloride based carrier. The reported examples relates to the production of polymers having good morphology, characterized by the absence of fines and by the high bulk density which is for LLDPE produced between 0.32 and 0.40 g/ml and for HDPE between 0.33 and 0.438 g/ml.

However, in the case of LLDPE production, the polymer obtained presents an undesired comonomer distribution in its chain, evidenced by the high xylene soluble content at different polymer densities. As an example, a polyethylene with 0.919 g/ml of polymer density has a xylene soluble content of 12.5% by weight.

In addition, EP-A-0522651 describes a supported catalyst for the (co)polymerization of ethylene, composed of a silica support and a catalytically active part containing titanium, magnesium, chlorine and alkoxy groups, and a process for obtaining the same. A supported catalyst for the (co)polymerization of ethylene is also known from EP-A-0480435. This catalyst comprises a silica carrier and a catalytically active portion including titanium, magnesium, chlorine and alkoxy groups, obtainable by suspending activated silica in a solution of magnesium chloride and titanium tetraalcoholate in a liquid aliphatic acid ester, eliminating the aliphatic add ester from the resulting suspension to recover a solid, and reacting the resulting solid with an alkyl aluminium chloride.

Furthermore, EP-A-0045885 discloses catalyst components suitable for obtaining ethylene polymers having a broad distribution of molecular weights, obtainable by reacting (A) a magnesium compound, such as magnesium chloride, magnesium alcoholate or a Grignard compound, with (B) a titanium, vanadium or zirconium compound having at least two metal-oxygen bonds, such as a tetraalcoholate, and with (C) a halogenated compound of a transition metal preferably selected from titanium, vanadium or zirconium, such as titanium tetrachloride.

### SUMMARY OF THE INVENTION

The present invention relates to a process for obtaining a solid catalyst component for ethylene polymerization and copolymerization, wherein a carrier of particulate silica (65 to 85% by weight) is impregnated with a catalytically active portion (15 to 35% by weight) including titanium, magnesium, chlorine, alkoxy groups and at least one organometallic compound of group 13 of the periodic table, the process comprising the steps of:
(a) impregnating an activated particulate silica in particles using a solution of an organometallic compound of group 13 of the periodic table in an amount ranging from 0.1 to 1 mmole of the organometallic solution per mmole of OH on the silica surface, in an inert organic solvent;
(b) removing the supernatant liquid from the step (a);
(c) preparing a solution obtained by reacting at least one magnesium compound, selected from magnesium halides and magnesium alkoxides, in an amount ranging from 0.0024 to 0.24 g of magnesium per g of silica, and at least one titanium compound, selected from titanium alkoxides and titanium halogen alkoxides, in an amount ranging from 0.01 to 1 g of titanium per g of silica;
(d) impregnating the silica obtained on (b) using the solution prepared in (c);
(e) optionally reacting the solid obtained in (d) with a reducing agent selected from the group consisting of Na-alkyls, Li-alkyls, Zn-alkyls, Mg-alkyls and corresponding aryl-derivatives, Grignard compounds of the type RMgX and polyhydrosiloxanes, wherein R represents a linear or branched alkyl group, containing from 1 to 10 carbons or aryl-derivatives and X represents a halogen atom, and Al-alkyl halide or silicon compounds;
(f) reacting the solid obtained in (d) or (e) with a halogenating agent selected from the group consisting of methylaluminum dichloride, methylaluminum sesquichloride, isobutylaluminum dichloride, isobutylaluminum sesquichloride, ethylaluminum dichloride (EADC), diethylaluminum chloride (DEAC), ethylaluminum sesquichloride (EASC), SiCl₄, SnCl₄, HCl, Cl₂, HSiCl₃, aluminium chloride, ethylboron dichloride, boron chloride, diethylboron chloride, HCCl₃, PCl₃, POCl₃, acetyl chlorides, thionyl chloride, sulfur chloride, methyl trichlorosilane, dimethyl dichlorosilane, TiCl₄, VCl₄, CCl₄, t-butylchloride, n-butyl chloride, chloroform, 1,1,1-trichloroethane, 1,1,2-trichloroethane, 1,2-dichloroethane and dichloromethane;
(g) maintaining the solid obtained in (f) at a temperature from 60°C to 120°C from 0.5 hour to 5 hours;
(h) washing the solid obtained in (g) with an inert organic solvent;
(i) optionally washing the solid obtained in (h) with a solution of one or more organometallic compounds of group 13 of the periodic table in an amount ranging from 0 to 3 g of the organometallic compound per g of the dry catalyst component obtained.

Preferred embodiments of the process of the invention are set forth in claims 2 to 27.

In addition, the present invention relates to solid catalyst component for ethylene polymerization and copolymerization obtainable by a process as defined herein, wherein the solid catalyst component comprises a carrier of particulate silica and a catalytically active portion including 0.005 to 0.02 g of titanium per g of solid catalyst, 0.003 to 0.03 g of magnesium per g of solid catalyst, chlorine, alkoxy groups and at least one organometallic compound of group 13 of the periodic table in an amount ranging from 0.003 to 0.03 g of metal per g of solid catalyst.

The catalyst described herein is especially suitable for the production of ethylene homo- and copolymers as narrow molecular weight distribution high density polyethylene (NMWHDPE) and linear low density polyethylene (LLDPE) with controlled morphology and improved structure.

Additionally, the catalyst described herein produces a NMWHDPE with a melt flow ratio (MFR) lower than 27 that are particularly suitable for thermoforming and injection applications.

Further, the catalyst described herein produces a LLDPE with a low xylene soluble content due to the very good comonomer insertion allowing the production of films with superior optical properties and very low blocking.

Moreover, the catalyst described herein provides, when submitted to polymerization conditions, particles of ethylene homo and copolymers having high bulk density and containing a very small quantity of fines.

Furthermore, the catalyst described herein is useful in liquid phase or in gas phase, ethylene polymerization process.

Finally, the catalyst described herein is useful in polymerization process due to its high activity and low decay kinetics.

### BRIEF DESCRIPTION OF THE DRAWINGS

FIGURE 1 attached herein is a flowchart, which illustrates
   the preparation of the solid catalyst component.
FIGURE 2 attached herein is a flow diagram of a fluidized bed, gas phase pilot plant used to produce polyethylene.

### DETAILED DESCRIPTION

In the present specification, the expression Catalyst Decay means the half-life time of the active sites of a solid catalyst component which is measured as the time required for reaching 50% of the initial catalyst activity during polymerization run. A catalyst with low decay kinetics has a half-life time preferably higher than 3 hours.

The present invention discloses a solid component obtained from the interaction of a reaction product between at least one magnesium compound, chosen from magnesium halides and magnesium alkoxides and at least one titanium compound chosen from titanium alkoxides and titanium halogen alkoxides, an activated silica impregnated with organometallic compounds of group 13 of the periodic table and a halogenating agent, capable of interacting with the organometallic compounds of group 13 of the periodic table, to give a solid catalyst component, which is highly active in the polymerization and copolymerization of ethylene. Optionally a reducing agent can be used during the process of preparation of the present catalyst component.

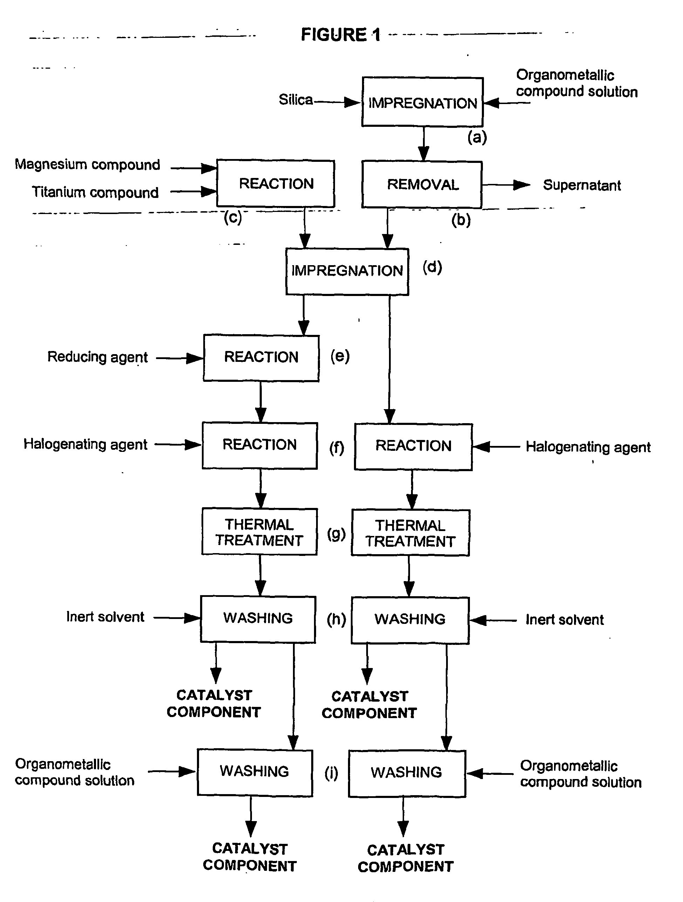

The present invention concerns a process for the preparation of a solid component of catalyst for the polymerization of ethylene and the copolymerization of ethylene with alpha-olefins, composed of a carrier of silica in particles (65 to 85 % by weight) and a catalytically active portion (15 to 35 % by weight) including titanium, magnesium, chlorine, alkoxy groups and at least one organometallic compound of group 13 of the periodic table. As illustrated in Fig. 1, this process comprises the following steps:
(a) impregnating an activated silica in particles using a solution of an organometallic compound of group 13 of the periodic table, in an inert organic solvent;
(b) removing the supernatant liquid from the step (a);
(c) preparing a solution obtained by reacting at least one magnesium compound, selected from magnesium halides and magnesium alkoxides and at least one titanium compound selected from titanium alkoxides and titanium halogen alkoxides;
(d) impregnating the silica obtained on (b) using the solution prepared in (c);
(e) optionally reacting the solid obtained in (d) with a reducing agent;
(f) reacting the solid obtained in (d) or (e) with a halogenating agent;
(g) treating thermally the solid obtained in (f);
(h) washing the solid obtained in (g) with an inert organic solvent;
(i) optionally, washing the solid obtained in (h) with a solution of one or more organometallic compounds of group 13 of the periodic table.

In step (a) of the process according to the present invention, the referable silica for this purpose is a microspheroidal, porous silica having an average particle size (diameter) ranging from 10 to 120 µm, preferably between 15 and 100 µm, a SiO₂ contents of > 90% by weight, a surface area ranging from 250 to 500 m²/g, preferably between 300 and 400 m²/g, a pore volume ranging from 1.0 to 2.0 ml/g, preferably between 1.5 and 1.8 ml/g, and an average pore diameter ranging from 10 to 40 nm, preferably between 20 and 30 nm. This silica is submitted to an activation treatment before being impregnated, which can be carried out by heating the silica in an inert atmosphere, at a temperature ranging from 100 to 750°C, over a period from 1 to 20 hours. The amount of remained OH on silica surface after this treatment ranges from 0.1 to 2 mmoles OH per g of silica, preferably between 0.5 and 1.5 moles OH per g of silica.

The impregnation is preferably carried out by suspending 10 to 20 parts by weight of silica for each 100 parts by volume of solution of organometallic compound of group 13 in aliphatic hydrocarbons, and maintained under stirring at a temperature which ranges from room temperature to the boiling point of the solution of organometallic compound of group 13 in aliphatic hydrocarbons, preferably at room temperature, over a period from 30 to 120 minutes, preferably between 50 and 60 minutes.

The organometallic compounds of group 13 of the periodic table suitable for use in the step (a) are alkyl compounds and alkyl halide compounds of metals belonging to these groups, and preferably aluminum, magnesium, lithium and zinc compounds. Specific examples of these compounds are trimethylaluminum, triethylaluminum (TEAL), methylaluminum dichloride, methylaluminum sesquichloride, isobutylaluminum dichloride, isobutylaluminum sesquichloride, ethylaluminum dichloride (EADC), diethylaluminum chloride (DEAC), ethylaluminum sesquichloride (EASC), tri-n-hexylaluminum (Tn-HAL), tri-n-octylaluminum (TnOAL), butyl ethylmagnesium (BEM), butyl octylmagnesium (BOMAG), methylmagnesium chloride and ethylmagnesium chloride. They can be used concentrated or preferably dissolved in the above organic solvent or in a different organic solvent chosen from aliphatic hydrocarbons.

Specific aliphatic hydrocarbons used as solvents for the above mentioned solution can have between 4 and 50 carbons, preferably between 6 and 20 carbons. Specific examples of these aliphatic hydrocarbons used as solvents are hexane, heptane, octane, isoparaffin, and the most preferably are hexane and heptane.

In step (a) of the process, the impregnation step using the solution of organometallic compound of group 13 in aliphatic hydrocarbons, is carried out by using an amount of organometallic compound, ranging from 0.1 to 1 mmole of the organometallic solution per mmole of OH on the silica surface, preferably 0.3 to 0.7 mmoles of the organometallic solution per mmole of OH on the silica surface.

At the end of the impregnation treatment, the silica can be removed (b) from the suspension by usual methods such as settling and siphoning, filtration or centrifugation. The operating temperature of this step can vary from room temperature to the boiling point of the aliphatic hydrocarbon used as solvent, preferably at room temperature. The wet silica is directly used in the next step.

According to the present invention, in step (c) of the process, a liquid component from the reaction between at least one magnesium compound, chosen from magnesium halides and magnesium alkoxides and at least one titanium compound, chosen from titanium alkoxides and titanium halogen alkoxides, is prepared. Generally, it is necessary to heat the mixture of these compounds, at a temperature in the range of about 100°C to about 200°C, preferably between 140°C and 160°C, over a period of time from 1 to 100 hours, preferably between 10 and 30 hours. The mixture comprising said compounds has to be prepared under turbulent stirring and under inert conditions. After the formation of the product obtained from the reaction between these compounds, which is note by the disappearance of the solid suspension, the temperature of the obtained liquid product can be reduced to ambient temperature without precipitation of any solid. This liquid component is diluted in an inert organic solvent to form a clear solution. Specific organic solvents used for the above mentioned solution can be aliphatic hydrocarbons having between 4 and 50 carbons, preferably between 6 and 20 carbons. Specific examples of these aliphatic hydrocarbons used as organic solvents are: hexane, heptane, octane, isoparaffin, most preferably hexane and heptane.

The magnesium compounds suitable for the purpose of the invention are those having the formulae MgX₂ or Mg (OR)₂, wherein R represents a linear or branched alkyl group, containing from 1 to 10 carbons and X represents a halogen atom and preferably a chlorine atom. Specific examples of magnesium compounds are magnesium dichloride, magnesium diethylate, magnesium di-n-butylate, magnesium diisopropylate and magnesium diisobutylate.

The amount of magnesium compound used in the above preparation corresponds to the amount ranging from 0.0024 to 0.24 g of magnesium per g of silica, preferably between 0.0042 and 0.042 g of magnesium per g of silica.

The titanium compounds most suited for the purpose are alkoxides and chloroalkoxides, containing from 1 to 4 carbons in the alkoxide portion. Specific examples of these compounds are: titanium tetra-n-propylate, titanium tetra-n-butylate, titanium tetra-i-propylate, titanium tetra-i-butylate and the corresponding titanium mono- or di-chloroalkoxides.

The amount of titanium compound used in the above preparation corresponds to an amount ranging from 0.01 to 1 g of titanium per g of silica, preferably between 0.0175 and 0.175 g of titanium per g of silica.

In general, when preparing the solution of the step (c), titanium is used in such an amount that the molar ratio Ti/Mg varies within the range of 0.3 to 4, and preferably within the range of 0.5 to 2.

In step (d) the silica obtained on step (b) is suspended in an inert organic solvent, such as a hydrocarbon solvent of the aliphatic type, preferably the same used in the previous steps and the dissolved product prepared on step (c) is added to the suspension. The impregnation is carried out by suspending 100 parts by weight of silica, obtained on step (b), for each 5 to 200 parts by volume of the component prepared on step (c) and after dilution in the inert organic solvent. The suspension is maintained under stirring at a temperature that ranges from room temperature to the boiling point of the mixture, preferably at 60°C, over a period of time from 30 to 180 minutes, preferably between 50 and 60 minutes. In this way a solid component suspended in an inert organic solvent is obtained.

Optionally the solid component obtained in step (d) can be submitted to reducing conditions in a step (e). Said result is obtained, for example, by using reducing agents, such as Na-alkyls, Li-alkyls, Zn-alkyls, Mg-alkyls and corresponding aryl-derivatives, Grignard compounds of the type RMgX, wherein R represents a linear or branched alkyl group, containing from 1 to 10 carbons or aryl-derivatives and X represents a halogen atom and preferably a chlorine atom, Al-alkyl halide compounds or by using reducing agents such as silicon compounds. Particularly effective silicone compounds are the polymethylhydrosiloxanes in which the monomer unit has the general formula [-HSiR-O-]ₙ wherein R is H, halogen, alkyl with 1 to 10 carbon atoms, aryl with 6 to 10 carbon atoms, alkoxyl with 1 to 10 carbon atoms, aryloxyl with 6 to 10 carbon atoms or carboxyl with 1 to 10 carbon atoms, and n is a degree of polymerization that ranges between 5 and 100. Specific examples of such polymethylhydrosiloxanes (PMHS) include the compounds: (CH₃)₃SiO-[(CH₃)HsiO-]ₙSi(CH₃)₃, wherein n varies from 1 to 35, (CH₃HSiO)₄, (CH₃HSiO)₃, H₃Si-O-SiH₂-OSiH₃, phenylhydropolysiloxanes in which the hydrogen atoms can be partially replaced by methyl groups.

Other silicon compounds useful as reducing agents in the practice of this invention are: silanes (SiₘH₂ₘ₊₂, in which m is a number equal to or higher than 1), alkyl-silanes or aryl-silanes (RₓSiH₄₋ₓ, in which R is alkyl or aryl and x is a number varying from 1 to 3) and alkoxy-silanes or aryloxy-silanes (ROₓSiH₄₋ₓ, in which R is alkyl or aryl and x is a number varying from 1 to 3).

The reducing agent chosen from the above examples, preferably polymethylhydrosiloxanes (PMHS), is added to the solid obtained in the step (d), dissolved preferably in the same inert organic solvent used for the reaction suspension. This addition is carried out slowly over a period of time from 30 to 180 minutes, preferably between 50 and 80 minutes and the solid suspension is maintained under stirring at a temperature ranging from room temperature to the boiling point of the aliphatic hydrocarbon used as solvent, preferably at 60°C.

The amount of reducing agent that can be used in step (e) corresponds to the amount ranging from 0 to 2 moles per mole of titanium, preferably between 0 and 0.1 mole per mole of titanium. It has been observed, in the experiments, that the quantity used of this reducing agent can control the amount of titanium fixed on silica at the final catalyst.

In the next step of the process according to the present invention, the suspension obtained in (d) or (e), which is still under stirring, is put in contact and interacted with one or more halogenating agents.

Halogenating agents useful in the practice of the present invention can be either liquid or gaseous materials, pure or preferably dissolved in an inert organic solvent. The halogenating agents used in the present invention are selected from the group consisting of methylaluminum dichloride, methylaluminum sesquichloride, isobutylaluminum dichloride, isobutylaluminum sesquichloride, ethylaluminum dichloride (EADC), diethylaluminum chloride (DEAC), ethylaluminum sesquichloride (EASC), SiCl₄, SnCl₄, HCl, Cl₂, HSiCl₃, aluminum chloride, ethylboron dichloride, boron chloride, diethylboron chloride, HCCl₃, PCl₃, POCl₃, acetyl chlorides, thionyl chloride, sulfur chloride, methyl trichlorosilane, dimethyl dichlorosilane, TiCl₄, VCl₄, CCl₄, t-butyl chloride, n-butyl chloride, chloroform, 1,1,1-trichloroethane, 1,1,2-trichloroethane, 1,2-dichloroethane and dichloromethane.

The preferred halogenating agents are chlorinating agents and of these SiCl₄, SnCl₄, HCl, Cl₂, HSiCl₃, methyl trichlorosilane, dimethyl dichlorosilane, t-butyl chloride, n-butyl chloride, chloroform, 1,1,1-trichloroethane, 1,1,2-trichloroethane, 1,2-dichloroethane and dichloromethane are preferred, most preferably SiCl₄.

The amount of halogenating agent used in the step (f) of the process corresponds to the amount ranging from 0.5 to 3 moles of halogenating agent per mole of titanium, preferably between 1 and 1.8 moles of halogenating agent per mole of titanium.

The time necessary for halogenating Ti-alkoxide and optionally Mg-alkoxide varies from 0.5 hour to 5 hours, preferably from 1.5 hours to 2.5 hours. The temperature of the solid suspension halogenation ranges from room temperature to the boiling point of the aliphatic hydrocarbon used as solvent, preferably at 60°C.

In step (g) of the process, the solid obtained in (f) is kept under higher temperature that depends on the inert organic solvent used. According to the present invention, the time necessary for this thermal treatment of the solid obtained in step (f) ranges from 0.5 hour to 5 hours, preferably from 3 to 5 hours, and the temperature for this purpose depends on the organic solvent used and is from 60°C to 120°C, preferably from 60°C to 75°C, when hexane is used as the organic solvent.

At the step (h) after the thermal treatment, the solid can be separated from the suspension, for example by settling and siphoning, filtration or centrifugation, washed with an inert organic solvent, preferably hexane, and then dried. The washing temperature can vary from room temperature to the boiling point of the aliphatic hydrocarbon used as solvent, preferably at room temperature.

Optionally, the solid obtained in (h) is washed with a solution of organometallic compounds of group 13 of the periodic table. More specifically, in the optional step (i) the solid obtained in step (h) is suspended in an inert organic solvent such as hexane or heptane, and it is put in contact with one or more organometallic compounds of group 13 of the periodic table, preferably metal-alkyl compounds or metal-alkyl halide compounds belonging to this group, in special aluminum, magnesium, lithium and zinc compounds. Specific examples of these compounds are methylaluminum dichloride, methylaluminum sesquichloride, isobutylaluminum dichloride, isobutylaluminum sesquichloride, ethylaluminum dichloride (EADC), diethylaluminum chloride (DEAC), ethylaluminum sesquichloride (EASC), tri-n-hexylaluminum (Tn-HAL), tri-n-octylaluminum (TnOAL). They can be used concentrated or preferably dissolved in the above organic solvent or in a different organic solvent chosen from aliphatic hydrocarbons. The process is carried out at a temperature ranging from room temperature to the boiling point of the organic solvent used as solvent, preferably at room temperature, for a period of time that can vary from 10 minutes to 24 hours, preferably from 40 minutes to 5 hours.

When using more than one organometallic compound in the step (i), the different compounds can be fed in the same solution or in individual solutions, at the same time or in subsequent additions.

The amount of the metal-alkyl halide compound of group 13 or metal-alkyl compound of group 13 of the periodic table, used in the step (i) of the process, is from 0 to 3 g of the corresponding metal-alkyl halide compound of group 13 or metal-alkyl compound of group 13, per g of dry catalyst component obtained, preferably between 0.05 and 1 g of the corresponding metal-alkyl halide compound of group 13 or metal-alkyl compound of group 13, per g of dry catalyst component obtained.

The use of inert organic solvents, most specifically aliphatic hydrocarbons, in all process steps of the present invention brings another important feature to the solid catalyst component characteristics. The solid catalyst component obtained is completely free of residual polar solvents, such as ethanol, and their derivatives in its final composition.

The titanium amount that remains fixed on the solid catalyst component may reach up to 10% by weight, expressed as the Ti metal content, and it is preferably comprised between 0.5 and 2% by weight.

The magnesium amount that remains fixed on the solid catalyst component may reach up to 6% by weight, expressed as the Mg metal content, and it is preferably comprised between 0.3 and 3.0% by weight.

The chlorine amount that remains fixed on the solid catalyst component may reach up to 20% by weight, expressed as the Cl contents, and it is preferably between 5 and 12% by weight.

The alkoxy amount that remains fixed on the solid catalyst component may reach up to 20% by weight and it is preferably between 3 and 8% by weight.

The amount of organometallic compound of group 13 of the periodic table that remains fixed on the solid catalyst component may reach up to 5% by weight, expressed as the metal contents, and it is preferably between 0.3 and 3% by weight. This organometallic compound of group 13 are metal-alkyl compounds or metal-alkyl halide compounds belonging to these groups, in special organoaluminum, organomagnesium, organolithium and organozinc compounds, pure or in mixtures.

The particle size distribution of the solid catalyst component of the present invention is very close to the silica used as carrier and, as consequence, its average particle size ranges also from 10 to 120 µm. The solid catalyst component surface area ranges from 80 to 300 m²/g and its pore volume ranges from 0.1 to 1.0 ml/g.

The catalyst component of the present invention is suitable for using in liquid phase or gas phase, ethylene polymerization process. The co-catalyst used in the polymerization process is an alkyl-aluminum, preferably trimethyl aluminum or triethyl aluminum. The mass ratio co-catalyst:catalyst in the polymerization process is between 0.5:1 and 6.0:1.

An important feature is its ability to produce, when submitted to polymerization conditions, particles of homo and copolymers of ethylene with controlled morphology having high bulk density and containing a very small quantity of fines. This feature allows the use of this catalyst in a process where the catalyst can be fed directly into the polymerization reactor. Particular forms to feed the catalyst are in dry bulk powder, in paste, in oil suspension or in solvent suspension. As an alternative the catalyst can be prepolymerized with ethylene or propylene and optionally with a comonomer before being fed into the reactor.

Another important feature of the present invention is its tolerance to the high electrostatic charges occurring in gas phase reactors. This feature helps to prevent the formation of polymer sheets or agglomerates on the reactor walls. The good catalytic yield and the low decay kinetics observed for the present invention, allows its use in most polymerization processes, including processes operating in more than one reactor in series.

A further feature characteristic of the catalyst of the present invention is when using a microspheroidal silica as support the catalyst obtained has also a spheroidal morphology and in consequence a polymer product with good morphology and flowability is obtained.

The catalyst component of the present invention is advantageously used in the polymerization of ethylene and mixtures thereof with alpha-olefins CH₂ = CHR, wherein R is an alkyl or cicloalkyl or aryl radical with 1-12 carbon atoms because it has a high activity and low decay kinetics. In particular, it is used in the preparation of:
- High density polyethylenes (HDPE, having a density greater than 0.940 g/cm³), particularly with narrow molecular weight distribution (MFR < 27), including homopolymers of ethylene and copolymers of ethylene with one or more alpha-olefins having from 3 to 14 carbon atoms. These products are particularly suitable for thermoforming and injection applications;
- Linear medium density and linear low density polyethylenes (LMDPE and LLDPE, having a density lower than 0.940 g/cm³) most specifically very low and ultra low density linear polyethylenes (VLDPE and ULDPE, having a density lower than 0.920 g/cm³ and as low as 0.880 g/m³) consisting of copolymers of ethylene with one or more alpha-olefins having from 3 to 14 carbon atoms, having a content of units derived from ethylene greater than approximately 80% by weight. These products have improved properties due to the very good comonomer insertion and, in most cases, they have also a narrow molecular weight distribution (MFR < 27). Hence the low xylene soluble contents are obtained, allowing the production of films with superior optical properties and very low blocking. The LMDPE products are particularly useful for rotomolding applications;
- Elastomeric copolymers of ethylene and propylene and elastomeric terpolymers of ethylene and propylene with minor amounts of a diene, having a content of units derived from ethylene comprised between 30 and 70% by weight.

### EXAMPLES

The present invention is now explained in more details by means of the following Examples, which should not be understood as limiting the scope of the invention.

The properties here indicated are determined according to the following methods:
- Surface area and pore volume: determined by nitrogen adsorption according to the B.E.T methodology using a "Micromeritics ASAP 2010" apparatus.
- Size of the catalyst particles: determined according to a method based on the principle of optical diffraction of monochromatic laser light, using the "Malvern Instr. 2600" apparatus.
- MIE melt index: ASTM D-1238, condition E
- MIF melt index: ASTM D-1238, condition F
- MFR melt flow ratio: MIF/MIE
- Flowability: it is the time required by 100 g of polymer to flow through a stainless steel funnel (outlet opening diameter of 12.7 mm and side walls at 20° to the vertical).
- Bulk density: ASTM D-1895
   ■ Morphology: optical microscopy.
   ■ Fraction soluble in xylene: determined at 25° C.
   ■ Comonomer contents: percentage by weight, as determined via I.R.
   spectra.
   ■ Polymer density: ASTM D-1928-C and ASTM D-1505.
   ■ Haze: ASTM-D 1003
   ■ Gloss: ASTM-D 2457
   ■ Blocking: ASTM-D 3354
   ■ The haze, gloss and blocking measurements are made in films of 80 µm of thickness with 1500 ppm of an amorphous silica as additive.
   ■ Particle size distribution of the particulate polymer: ASTM-D 1921

In the following experimental examples, which are intended to provide a better illustration of the present invention, an activated microspheroidal silica carrier is used, having an average particle size of 40 µm, a SiO₂ contents superior to 99% by weight, a surface area of 290 m²/g and a pore volume of 1.62 ml/g. The triethylaluminum (TEAL) and the diethylaluminum chloride (DEAC) are available from Akzo Nobel Co. The titanium tetra-n-butylate is available from Merck. The magnesium chloride is supplied by from Maruyasu Co. The hexane available from Phillips Petroleum was purified with molecular sieves and nitrogen to remove oxygen and water. All solid component preparations were carried out in an inert atmosphere.

### PREPARATION OF THE SOLID CATALYST COMPONENT

### EXAMPLE 1

In a 5 liter flask fitted with a mechanical stirrer and previously purged with nitrogen were fed 44 g (0.462 moles) of anhydrous MgCl₂ and 330 ml (0.969 moles) of Ti(OBu)₄. This mixture was allowed to stir at 300 rpm and heated to 150°C for about 12 hours in order to have the solids completely dissolved, thereby a clear liquid product was obtained. This resulting liquid was cooled down to 40°C and under gently stirring at 150 rpm, it was diluted with 3200 ml of anhydrous hexane. Into this solution kept at 40°C and under the same stirring, 250 g of the silica support were added. This silica was previously dehydrated and treated with 19 ml (0.139 moles) of triethylaluminum diluted in anhydrous hexane, for 50 minutes and at room temperature. Once the addition of the silica is completed, the mixture was heated to 60°C and kept at this temperature for 1 hour. Into this mixture, kept at 60°C and under gently stirring, a solution consisting of 100 ml of anhydrous hexane and 192 ml of PMHS (0.085 moles) was dropped into it over a period of time of 1.5 hours. At the end of the addition, stirring was continued for 2 hours at a temperature of 60°C. To this mixture a solution of 200 ml of anhydrous hexane and 184 ml of SiCl₄ (1.606 moles) was dropped over a period of time of 1 hour. At the end of the addition, stirring was continued for 3.5 hours at a temperature of 60°C. The temperature of the mixture was then brought to 65°C and kept for additional 2 hours. After cooling the mixture to room temperature, the stirring was stopped to have the solid settled. The supernatant liquid was removed, the solid was repeatedly washed with anhydrous hexane and then dried at 60°C under nitrogen flow thus giving 390 g of a reddish powder.

The chemical and physical characteristics of the resulting reddish powder were as follows:
Total Titanium = 7.0 % (by weight)
Mg = 2.0 % (by weight)
SiO₂ = 75.9 % (by weight)
Al = 0.5 % (by weight)
Cl = 10.9 % (by weight)
OBu = 4.1 % (by weight)
Surface Area (B.E.T.) = 200 m²/g
Pore Volume (B.E.T.) = 0.45 cm³/g

### EXAMPLE 2

In a 5 liter flask fitted with a mechanical stirrer and previously purged with nitrogen were fed 5.28 g (0.055 moles) of anhydrous MgCl₂ and 39.6 ml (0.116 moles) of Ti(OBu)₄. This mixture was allowed to stir at 300 rpm and heated to 150°C for about 12 hours in order to have the solids completely dissolved, thereby a clear liquid product was obtained. This resulting liquid was cooled down to 40°C and under gently stirring at 150 rpm, it was diluted with 3200 ml of anhydrous hexane. Into this solution kept at 40°C and under the same stirring, 300 g of the silica support were added. This silica was previously dehydrated and treated with 23 ml (0.167 moles) of triethylaluminum diluted in anhydrous hexane, for 50 minutes and at room temperature. Once the addition of the silica is completed, the mixture was heated to 60°C and kept at this temperature for 1 hour. Into this mixture, kept at 60°C and under gently stirring, a solution consisting of 100 ml of anhydrous hexane and 23 ml of PMHS (0.010 moles) was dropped into it over a period of time of 1.5 hours. At the end of the addition, stirring was continued for 2 hours at a temperature of 60°C. To this mixture a solution of 100 ml of anhydrous hexane and 22 ml of SiCl₄ (0.192 moles) was dropped over a period of 1 hour. At the end of the addition, stirring was continued for 3.5 hours at a temperature of 60°C. The temperature of the mixture was then brought to 65°C and kept for additional 2 hours. After cooling the mixture to room temperature, the stirring was stopped to have the solid settled. The supernatant liquid was removed, the solid was repeatedly washed with anhydrous hexane and finally dried at 60°C under nitrogen flow thus giving 360 g of a light reddish powder.

The chemical and physical characteristics of the resulting reddish powder were as follows:
Total Titanium = 1.4 % (by weight)
Mg = 0.5 % (by weight)
SiO₂ = 81.0 % (by weight)
Al = 1.4 % (by weight)
Cl = 8.4 % (by weight)
OBu = 6.3% (by weight)
Surface Area (B.E.T.) = 150 m²/g
Pore Volume (B.E.T.) = 0.35 cm³/g

### EXAMPLE 3

In a 5 liter flask fitted with a mechanical stirrer and previously purged with nitrogen were fed 5.28 g (0.055 moles) of anhydrous MgCl₂ and 39.6 ml (0.116 moles) of Ti(OBu)₄. This mixture was allowed to stir at 300 rpm and heated to 150°C for about 12 hours in order to have the solids completely dissolved, thereby a clear liquid product was obtained. This resulting liquid was cooled down to 40°C and under gently stirring at 150 rpm, it was diluted with 3200 ml of anhydrous hexane. Into this solution kept at 40°C and under the same stirring, 300 g of the silica support were added. This silica was previously dehydrated and treated with 23 ml (0.167 moles) of triethylaluminum diluted in anhydrous hexane, for 50 minutes and at room temperature. Once the addition of the silica is completed, the mixture was heated to 60°C and kept at this temperature for 1 hour. Into this mixture, kept at 60°C and under gently stirring, a solution consisting of 100 ml of anhydrous hexane and 23 ml of PMHS (0.010 moles) was dropped into it over a period of time of 1.5 hours. At the end of the addition, stirring was continued for 2 hours at a temperature of 60°C. To this mixture a solution of 100 ml of anhydrous hexane and 22 ml of SiCl₄ (0.192 moles) was dropped over a period of time of 1 hour. At the end of the addition, stirring was continued for 3.5 hours at a temperature of 60°C. The temperature of the mixture was then brought to 65°C and kept for additional 2 hours. After cooling the mixture to room temperature, the stirring was stopped to have the solid settled. The supernatant liquid was removed, the solid was repeatedly washed with anhydrous hexane. The solid thus obtained was again suspended in 2200 ml of anhydrous hexane and then 31.4 g of DEAC (0.260 moles) in 200 ml of anhydrous hexane were added to the resulting suspension under gently stirring. Contact was maintained for 50 min at room temperature. Finally, the supernatant liquid was removed and the solid was dried at 60°C under nitrogen flow thus giving 300 g of a brown-reddish powder.

The chemical and physical characteristics of the resulting reddish powder were as follows:
Total Titanium = 1.2 % (by weight)
Mg = 0.3 % (by weight)
SiO₂ = 81.0 % (by weight)
Al = 1.8 % (by weight)
Cl = 7.0 % (by weight)
OBu = 7.7 % (by weight)
Surface Area (B.E.T.) = 155 m²/g
Pore Volume (B.E.T.) = 0.36 cm³/g

### EXAMPLE 4

In a 5 liter flask fitted with a mechanical stirrer and previously purged with nitrogen were fed 5.28 g (0.055 moles) of anhydrous MgCl₂ and 39.6 ml (0.116 moles) of Ti(OBu)₄. This mixture was allowed to stir at 300 rpm and heated to 150°C for about 12 hours in order to have the solids completely dissolved, thereby a clear liquid product was obtained. This resulting liquid was cooled down to 40°C and under gently stirring at 150 rpm, it was diluted with 3200 ml of anhydrous hexane. Into this solution kept at 40°C and under the same stirring, 300 g of the silica support were added. This silica was previously dehydrated and treated with 23 ml (0.167 moles) of triethylaluminum diluted in anhydrous hexane, for 50 minutes and at room temperature. Once the addition of the silica is completed, the mixture was heated to 60°C and kept at this temperature for 1 hour. To this mixture a solution of 100 ml of anhydrous hexane and 22 ml of SiCl₄ (0.192 moles) was dropped over a period of time of 1 hour. At the end of the addition, stirring was continued for 3.5 hours at a temperature of 60°C. The temperature of the mixture was then brought to 65°C and kept for additional 2 hours. After cooling the mixture to room temperature, the stirring was stopped to have the solid settled. The supernatant liquid was removed, the solid was repeatedly washed with anhydrous hexane and then dried at 60°C under nitrogen flow, thus giving 390 g of a light reddish powder.

The chemical and physical characteristics of the resulting reddish powder were as follows:
Total Titanium = 1.5 % (by weight)
Mg = 0.3 % (by weight)
SiO₂ = 81.2 % (by weight)
Al = 1.2 % (by weight)
Cl = 7.2 % (by weight)
OBu = 7.6 % (by weight)
Surface Area (B.E.T.) = 153 m²/g
Pore Volume (B.E.T.) = 0.36 cm³/g

### EXAMPLE 5

In a 5 liter flask fitted with a mechanical stirrer and previously purged with nitrogen were fed 52.8 g (0.554 moles) of anhydrous MgCl₂ and 396 ml (1.163 moles) of Ti(OBu)₄. This mixture was allowed to stir at 300 rpm and heated to 150°C for about 12 hours in order to have the solids completely dissolved, thereby a clear liquid product was obtained. This resulting liquid was cooled down to 40°C and under gently stirring at 150 rpm, it was diluted with 3200 ml of anhydrous hexane. Into this solution kept at 40°C and under the same stirring, 300 g of the silica support were added. This silica was previously dehydrated and treated with 23 ml (0.167 moles) of triethylaluminum diluted in anhydrous hexane, for 50 minutes and at room temperature. Once the addition of the silica is completed, the mixture was heated to 60°C and kept at this temperature for 1 hour. To this mixture a solution of 200 ml of anhydrous hexane and 221 ml of SiCl₄ (1.929 moles) was dropped over a period of time of 1 hour. At the end of the addition, stirring was continued for 3.5 hours at a temperature of 60°C. The temperature of the mixture was then brought to 65°C and kept for additional 2 hours. After cooling the mixture to room temperature, the stirring was stopped to have the solid settled. The supernatant liquid was removed, the solid was repeatedly washed with anhydrous hexane and then dried at 60°C under nitrogen flow thus giving 300 g of a light reddish powder.

The chemical and physical characteristics of the resulting reddish powder were as follows:
Total Titanium = 1.7 % (by weight)
Mg = 2.4 % (by weight)
SiO₂ = 76.7 % (by weight)
Al = 0.8 % (by weight)
Cl = 10.0 % (by weight)
OBu = 7.5 % (by weight)
Surface Area (B.E.T.) = 185 m²/g
Pore Volume (B.E.T.) = 0.55 cm³/g

### EXAMPLE 6

In a 5 liter flask fitted with a mechanical stirrer and previously purged with nitrogen were fed 52.8 g (0.554 moles) of anhydrous MgCl₂ and 396 ml (1.163 moles) of Ti(OBu)₄. This mixture was allowed to stir at 300 rpm and heated to 150°C for about 12 hours in order to have the solids completely dissolved, thereby a clear liquid product was obtained. This resulting liquid was cooled down to 40°C and under gently stirring at 150 rpm, it was diluted with 3200 ml of anhydrous hexane. Into this solution kept at 40°C and under the same stirring, 300 g of the silica support were added. This silica- was previously dehydrated and treated with 23 ml (0.167 moles) of triethylaluminum diluted in anhydrous hexane, for 50 minutes and at room temperature. Once the addition of the silica is completed, the mixture was heated to 60°C and kept at this temperature for 1 hour. To this mixture a solution of 200 ml of anhydrous hexane and 221 ml of SiCl₄ (1.929 moles) was dropped over a period of time of 1 hour. At the end of the addition, stirring was continued for 3.5 hours at a temperature of 60°C. The temperature of the mixture was then brought to 65°C and kept for additional 2 hours. After cooling the mixture to room temperature, the stirring was stopped to have the solid settled. The supernatant liquid was removed, the solid was repeatedly washed with anhydrous hexane. The solid thus obtained was again suspended in 2200 ml of anhydrous hexane and then 30 g of DEAC (0.249 moles) in 200 ml of anhydrous hexane were added to the resulting suspension under gently stirring. Contact was maintained for 50 min at room temperature. Finally, the supernatant liquid was removed and the solid was dried at 60°C under nitrogen flow thus giving 400 g of a brown-reddish powder.

The chemical and physical characteristics of the resulting reddish powder were as follows:
Total Titanium = 1.8 % (by weight)
Mg = 2.7 % (by weight) .
SiO₂ = 75.5 % (by weight)
Al = 1.4 % (by weight)
Cl = 12.0 % (by weight)
OBu = 5.6 % (by weight)
Surface Area (B.E.T.) = 180 m²/g
Pore Volume (B.E.T.) = 0.53 cm³/g

### EXAMPLE 7

In a 5 liter flask fitted with a mechanical stirrer and previously purged with nitrogen were fed 24 g (0.252 moles) of anhydrous MgCl₂ and 180 ml (0.528 moles) of Ti(OBu)₄. This mixture was allowed to stir at 300 rpm and heated to 150°C for about 12 hours in order to have the solids completely dissolved, thereby a clear -liquid product was obtained This resulting liquid was cooled down to 40°C and under gently stirring at 150 rpm, it was diluted with 3200 ml of anhydrous hexane. Into this solution kept at 40°C and under the same stirring, 300 g of the silica support were added. This silica was previously dehydrated and treated with 23 ml (0.167 moles) of triethylaluminum diluted in anhydrous hexane, for 50 minutes and at room temperature. Once the addition of the silica is completed, the mixture was heated to 60°C and kept at this temperature for 1 hour. To this mixture a solution of 100 ml of anhydrous hexane and 100 ml of SiCl₄ (0.873 moles) was dropped over a period of time of 1 hour. At the end of the addition, stirring was continued for 3.5 hours at a temperature of 60°C. The temperature of the mixture was then brought to 65°C and kept for additional 2 hours. After cooling the mixture to room temperature, the stirring was stopped to have the solid settled. The supernatant liquid was removed, the solid was repeatedly washed with anhydrous hexane and then dried at 60°C under nitrogen flow thus giving 360 g of a reddish powder.

The chemical and physical characteristics of the resulting reddish powder were as follows:
Total Titanium = 2.1 % (by weight)
Mg =1.4 % (by weight)
SiO₂ = 78.3 % (by weight)
Al = 0.9 % (by weight)
Cl = 8.7 % (by weight)
OBu = 7.6 % (by weight)
Surface Area (B.E.T.) = 193 m²/g
Pore Volume (B.E.T.) = 0.62 cm³/g

### EXAMPLE 8

In a 5 liter flask fitted with a mechanical stirrer and previously purged with nitrogen were fed 24 g (0.252 moles) of anhydrous MgCl₂ and 180 ml (0.528 moles) of Ti(OBu)₄. This mixture was allowed to stir at 300 rpm and heated to 150°C for about 12 hours in order to have the solids completely dissolved, thereby a clear liquid product was obtained. This resulting liquid was cooled down to 40°C and under gently stirring at 150 rpm, it was diluted with 3200 ml of anhydrous hexane. Into this solution kept at 40°C and under the same stirring, 300 g of the silica support were added. This silica was previously dehydrated and treated with 23 ml (0.167 moles) of triethylaluminum diluted in anhydrous hexane, for 50 minutes and at room temperature. Once the addition of the silica is completed, the mixture was heated to 60°C and kept at this temperature for 1 hour. To this mixture a solution of 100 ml of anhydrous hexane and 100 ml of SiCl₄ (0.873 moles) was dropped over a period of time of 1 hour. At the end of the addition, stirring was continued for 3.5 hours at a temperature of 60°C. The temperature of the mixture was then brought to 65°C and kept for additional 2 hours. After cooling the mixture to room temperature, the stirring was stopped to have the solid settled. The supernatant liquid was removed, the solid was repeatedly washed with anhydrous hexane. The solid thus obtained was again suspended in 2200 ml of anhydrous hexane and then 30 g of DEAC (0.249 moles) in 200 ml of anhydrous hexane were added to the resulting suspension under gently stirring. Contact was maintained for 50 min at room temperature. Finally, the supernatant liquid was removed and the solid was dried at 60°C under nitrogen flow thus giving 350 g of a brown-reddish powder.

The chemical and physical characteristics of the resulting reddish powder were as follows:
Total Titanium = 2.0 % (by weight)
Mg = 1.5 % (by weight)
SiO₂ = 76.8 % (by weight)
Al = 1.7 % (by weight)
Cl = 10.3 % (by weight)
OBu = 6.7 % (by weight)
Surface Area (B.E.T.) = 202 m²/g
Pore Volume (B.E.T.) = 0.48 cm³/g

### EXAMPLE 9

In a 5 liter flask fitted with a mechanical stirrer and previously purged with nitrogen were fed 52.8 g (0.554 moles) of anhydrous MgCl₂ and 396 ml (1.163 moles) of Ti(OBu)₄. This mixture was allowed to stir at 300 rpm and heated to 150°C for about 12 hours in order to have the solids completely dissolved, thereby a clear liquid product was obtained. This resulting liquid was cooled down to 40°C and under gently stirring at 150 rpm, it was diluted with 3200 ml of anhydrous hexane. Into this solution kept at 40°C and under the same stirring, 300 g of the silica support were added. This silica was previously dehydrated and treated with 23 ml (0.167 moles) of triethylaluminum diluted in anhydrous hexane, for 50 minutes and at room temperature. Once the addition of the silica is completed, the mixture was heated to 60°C and kept at this temperature for 1 hour. To this mixture a solution of 200 ml of anhydrous hexane and 221 ml of SiCl₄ (1.929 moles) was dropped over a period of time of 1 hour. At the end of the addition, stirring was continued for 3.5 hours at a temperature of 60°C. The temperature of the mixture was then brought to 65°C and kept for additional 2 hours. After cooling the mixture to room temperature, the stirring was stopped to have the solid settled. The supernatant liquid was removed, and the solid was repeatedly washed with anhydrous hexane. The solid thus obtained was again suspended in 2200 ml of anhydrous hexane and then 30 g of DEAC (0.249 moles) in 200 ml of anhydrous hexane were added to the resulting suspension under gently stirring. Contact was maintained for 50 min at room temperature. The supernatant liquid was removed and the solid was once again suspended in 2200 ml of anhydrous hexane and then 30 g of Tn-HAL (0.106 moles) in 200 ml of anhydrous hexane were added to the resulting suspension under gently stirring. Contact was maintained for 50 min at room temperature. Finally, the supernatant liquid was removed and the solid was dried at 60°C under nitrogen flow thus giving 340 g of a brown-reddish powder.

The chemical and physical characteristics of the resulting reddish powder were as follows:
Total Titanium = 1.9 % (by weight)
Mg = 2.9 % (by weight)
SiO₂ = 74.1 % (by weight)
Al = 1.5 % (by weight)
Cl = 12.6 % (by weight)
OBu = 6.0 % (by weight)
Surface Area (B.E.T.) = 167 m²/g
Pore Volume (B.E.T.) = 0.20 cm³/g

### EXAMPLE 10

In a 5 liter flask fitted with a mechanical stirrer and previously purged with nitrogen were fed 24 g (0.252 moles) of anhydrous MgCl₂ and 180 ml (0.528 moles) of Ti(OBu)₄. This mixture was allowed to stir at 300 rpm and heated to 150°C for about 12 hours in order to have the solids completely dissolved, thereby a clear liquid product was obtained. This resulting liquid was cooled down to 40°C and under gently stirring at 150 rpm, it was diluted with 3200 ml of anhydrous hexane. Into this solution kept at 40°C and under the same stirring, 300 g of the silica support were added. This silica was previously dehydrated and treated with 23 ml (0.167 moles) of triethylaluminum diluted in anhydrous hexane, for 50 minutes and at room temperature. Once the addition of the silica is completed, the mixture was heated to 60°C and kept at this temperature for 1 hour. To this mixture a solution of 100 ml of anhydrous hexane and 100 ml of SiCl₄ (0.873 moles) was dropped over a period of time of 1 hour. At the end of the addition, stirring was continued for 3.5 hours at a temperature of 60°C. The temperature of the mixture was then brought to 65°C and kept for additional 2 hours. After cooling the mixture to room temperature, the stirring was stopped to have the solid settled. The supernatant liquid was removed, and the solid was repeatedly washed with anhydrous hexane. The solid thus obtained was again suspended in 2200 ml of anhydrous hexane and then 60 g of DEAC (0.498 moles) in 200 ml of anhydrous hexane were added to the resulting suspension under gently stirring. Contact was maintained for 50 min at room temperature. Finally, the supernatant liquid was removed and the solid was dried at 60°C under nitrogen flow thus giving 300 g of a brown-reddish powder.

The chemical and physical characteristics of the resulting reddish powder were as follows:
Total Titanium = 2.0 % (by weight)
Mg = 1.3 % (by weight)
SiO₂ = 76.3% (by weight)
Al = 2.3 % (by weight)
Cl = 10.8 % (by weight)
OBu = 6.3 % (by weight)
Surface Area (B.E.T.) = 200 m²/g
Pore Volume (B.E.T.) = 0.45 cm³/g

### LABORATORY POLYMERIZATION TESTS

### EXAMPLE 11

### Polymerization of Ethylene (HDPE)

A 4-liter stainless steel autoclave, purged under nitrogen flow for 1 hour at 75°C and then cooled to 30°C, was fed with 0.06 g of the solid catalyst component from the example 8, 0.79 g of TEAL mixed with 75 ml of anhydrous hexane, and 280 g of anhydrous propane. The temperature was raised to 60°C, and then 520 g of anhydrous propane were fed. The temperature was raised again to 80°C and then 2 bars of hydrogen were fed simultaneously with 7 bars of ethylene. After that, the temperature was settled to 85°C. The polymerization was conducted in slurry liquid phase. The polymerization time was 2 hours, during which time the ethylene pressure was kept constant. After this period the reaction was stopped by venting off ethylene, hydrogen and propane and 55 g of polymer were obtained, which exhibited the following properties:

| | | |
|---|---|---|
| MIE | 2.4 | g/10 min |
| MIF/MIE | 26 | |
| Polymer Density | 0.96 | g/cm³ |
| Bulk Density | 0.46 | g/cm³ |

### EXAMPLE 12

### Copolymerization of Ethylene with Butene-1 (LLDPE)

A 4 liter stainless steel autoclave, purged under nitrogen flow for 1 hour at 75°C and then cooled to 30°C, was fed with 0.06 g of the solid catalyst component from the example 8, 0.78 g of TEAL mixed with 75 ml of anhydrous hexane, and 280 g of anhydrous propane. The temperature was raised to 60°C, and then 520 g of anhydrous propane were fed. The temperature was raised again to 70°C, and then 290 ml of butene-1 were fed simultaneously with 2 bars of hydrogen and 5 bars of ethylene. After that, the temperature is settled to 75°C. The polymerization was conducted in slurry liquid phase. The polymerization time was 3 hours, during which time the ethylene pressure was kept constant. After this period the reaction was stopped by venting off ethylene, butene-1, hydrogen and propane and 240 g of polymer were obtained, which exhibited the following properties:

| | | |
|---|---|---|
| MIE | 0.91 | g/10 min |
| MIF/MIE | 26 | |
| Fraction Soluble in Xylene | 9.2 | % |
| Comonomer content | 8.7 | % |
| Polymer Density | 0.917 | g/cm³ |
| Bulk Density | 0.36 | g/cm³ |

### PILOT PLANT TESTS

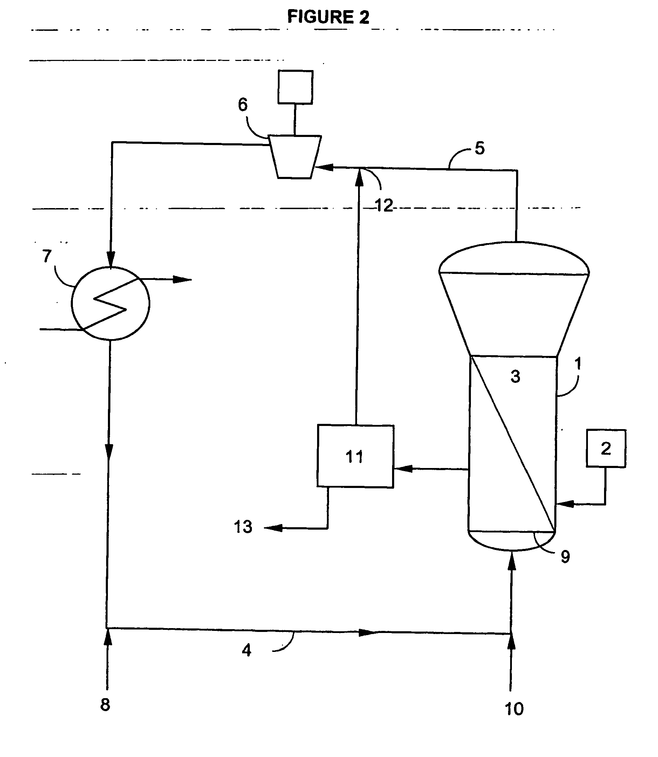

A pilot plant continuously operated was used to prepare LLDPE as shown in FIGURE 2.

A fluidized bed gas phase reactor **1** with 45 cm of internal diameter and 120 cm of reaction zone height is fed by a dry-solid catalyst feeder **2.** The bed of polymer particles in reaction zone **3** is kept in fluidized state by a recycle stream **4** that works as a fluidizing medium as well as a dissipating heat agent for absorbing the exothermal heat generated within reaction zone **3.** The superficial velocity of the gas, resulting from the flow rate of recycle stream **4** within reactor **1** is 0.7 m/s. Stream **5,** which contains the gas discharged from reactor **1**, said gas having low monomer contents, is fed to the suction of compressor **6.** The combined reaction and compression heats are then removed from recycle stream **5** in an external heat exchange system **7** in order to control the reactor temperature. The composition of stream **5** is kept constant to yield a polymer with the required specifications.

Make-up components are fed to the system at spot **8** so as to make up the composition of recycle stream **5.** So, make-up stream **8** will include the triethyl aluminum (TEAL) that directly reacts in a ratio of 2 moles of TEAL per mole of catalyst. Also at the spot **8,** propane is fed as the selected non-reactive compound required to maintain the total pressure of the system.

The polymerization catalyst is introduced as a dry powder by a catalyst feeder into reactor **1** in a site within the reaction zone **3,** close to the distributing plate 9 in a rate to control the residence time of the catalyst. The reactive gases, including ethylene and comonomers are introduced at the spot **10.**

The produced polymer is discharged from the reaction zone through a discharge system **11** that provides the recovery of the reactive and non-reactive gases, recycling said gases back to the recycle stream **5** at spot **12** and lowers the pressure of the discharged mixture of polymer and gases at certain pressure for later conveying the produced polymer particles **13** for downward sampling.

### EXAMPLES 13 to 23

The examples 13 to 23 were conducted in the gas phase pilot reactor at 88° C, using in each EXAMPLE respectively the catalysts produced in the EXAMPLES 1 to 10. The catalyst produced in the EXAMPLE 10 was also used in the pilot polymerization at 75° C as shown in the EXAMPLE 23.

In all examples the pilot reactor run was performed smoothly, with good catalytic yield and no agglomerates or sheets were formed. The polymers obtained had a good morphology and, in most cases, less than 1% of fines (< 250 µm).

The films obtained with these polymers presented very good optical properties and a low blocking strength.

During the performance of the EXAMPLE 20 it was performed a decay test and the measured half-life time was 3.8 hours. The results are shown in table 1.

| **TABLE 1** | | | | | | | | | | | |
|---|---|---|---|---|---|---|---|---|---|---|---|
| EXAMPLE | 13 | 14 | 15 | 16 | 17 | 18 | 19 | 20 | 21 | 22 | 23 |
| Catalyst used | Ex. 1 | Ex. 2 | Ex. 3 | Ex. 4 | Ex. 5 | Ex. 6 | Ex. 7 | Ex. 8 | Ex. 9 | Ex. 10 | Ex. 10 |
| Ti (%) | 7.0 | 1.4 | 1.2 | 1.5 | 1.7 | 1.8 | 2.1 | 2.0 | 1.9 | 2.0 | 2.0 |
| Mg(%) | 2.0 | 0.5 | 0.3 | 0.3 | 2.4 | 2.7 | 1.3 | 1.5 | 2.9 | 1.5 | 1.5 |
| Temperature (°C) | 88 | 88 | 88 | 88 | 88 | 88 | 88 | 88 | 88 | 88 | 75 |
| Ethylene partial pressure (bar) | 3 | 11.8 | 9 | 10.9 | 5 | 7 | 7 | 7 | 7 | 7 | 7 |
| Total pressure (bar) | 21 | 22 | 21 | 21 | 21 | 21 | 21 | 21 | 21 | 21 | 21 |
| Residence Time (h) | 4.43 | 3.71 | 5.32 | 3.20 | 4.86 | 3.92 | 3.18 | 2.89 | 3.91 | 3.70 | 3.15 |
| H₂/ethylene (mole/mole) | 0.10 | 0.098 | 0.086 | 0.096 | 0.096 | 0.118 | 0.098 | 0.12 | 0.13 | 0.12 | 0.17 |
| Butene/ ethylene (mole/mole) | 0.39 | 0.41 | 0.46 | 0.44 | 0.35 | 0.40 | 0.39 | 0.41 | 0.37 | 0.41 | 0.45 |
| Catalytic yield (kg/g) | 3.0 | 1.6 | 1.7 | 1.6 | 4.3 | 7.5 | 5.0 | 7.5 | 7.1 | 7.1 | 6.2 |
| Bulk Density (g/ cm³) | 0.28 | 0.34 | 0.38 | 0.34 | 0.29 | 0.31 | 0.38 | 0.38 | 0.38 | 0.38 | 0.35 |
| MIE (g/10 min) | 0.68 | 0.66 | 0.72 | 0.74 | 0.64 | 0.68 | 0.69 | 0.67 | 0.69 | 0.65 | 0.57 |
| MIF (g/10min) | 20.4 | 17.3 | 20.6 | 19.9 | 23.3 | 18.6 | 19.1 | 17.6 | 18.2 | 16.9 | 15.2 |
| MFR - F/E | 30 | 26 | 28 | 27 | 36 | 27 | 28 | 26 | 26 | 26 | 26 |
| Comonomer Content (%) | 8.8 | 7.8 | 8.7 | 7.7 | 9.4 | 8.3 | 8.4 | 7.9 | 8.2 | 8.1 | 8.8 |
| Fraction Soluble in Xylene (%) | 12.3 | 8.9 | 9.4 | 7.1 | 13.7 | 9.4 | 9.5 | 7.8 | 10.1 | 8.0 | 9.3 |
| Polymer Density (g/cm³) | 0.918 | 0.918 | 0.918 | 0.919 | 0.917 | 0.918 | 0.918 | 0.918 | 0.918 | 0.918 | 0.917 |
| Flowability (s/100 g) | - | 14.4 | 11.1 | 13.3 | 14.4 | 17.9 | 12.4 | 11.9 | 10.8 | 12.7 | 12.6 |
| Particle size distribution (wt %) | | | | | | | | | | | |
| <250 µ m | 2 | 2 | 1 | 1 | 2 | 3 | < 0.5 | 1 | 1 | 1 | 1 |
| 250 - 420 µ m | 7 | 7 | 7 | 2 | 7 | 5 | 2 | 2 | 2 | 2 | 2 |
| 420 - 840 µ m | 37 | 49 | 60 | 35 | 45 | 28 | 36 | 35 | 28 | 39 | 37 |
| > 840 µ m | 54 | 42 | 32 | 62 | 46 | 64 | 62 | 62 | 69 | 58 | 60 |
| Haze (%) | 11.3 | - | - | - | - | - | 11.6 | 11.3 | 11.3 | 11.4 | - |
| Gloss (%) | 73.0 | - | - | - | - | - | 79.5 | 80.7 | 79.3 | 80.2 | - |
| Blocking (g/100 cm²) | - | 22 | 21 | 15 | - | 24 | 24 | 16 | 30 | 19 | 24 |

## Claims

1. A process for obtaining a solid catalyst component for ethylene polymerization and copolymerization, wherein a carrier of particulate silica (65 to 85% by weight) is impregnated with a catalytically active portion (15 to 35% by weight) including titanium, magnesium, chlorine, alkoxy groups and at least one organometallic compound of group 13 of the periodic table, the process comprising the steps of:
(a) impregnating an activated particulate silica in particles using a solution of an organometallic compound of group 13 of the periodic table in an amount ranging from 0.1 to 1 mmole of the organometallic solution per mmole of OH on the silica surface, in an inert organic solvent;
(b) removing the supernatant liquid from the step (a);
(c) preparing a solution obtained by reacting at least one magnesium compound, selected from magnesium halides and magnesium alkoxides, in an amount ranging from 0.0024 to 0.24 g of magnesium per g of silica, and at least one titanium compound, selected from titanium alkoxides and titanium halogen alkoxides, in an amount ranging from 0.01 to 1 g of titanium per g of silica;
(d) impregnating the silica obtained in (b) using the solution prepared in (c);
(e) optionally reacting the solid obtained in (d) with a reducing agent selected from the group consisting of Na-alkyls, Li-alkyls, Zn-alkyls, Mg-alkyls and corresponding aryl-derivatives, Grignard compounds of the type RMgX and polyhydrosiloxanes, wherein R represents a linear or branched alkyl group, containing from 1 to 10 carbons or aryl-derivatives and X represents a halogen atom, and Al-alkyl halide or silicon compounds;
(f) reacting the solid obtained in (d) or (e) with a halogenating agent selected from the group consisting of methylaluminum dichloride, methylaluminum sesquichloride, isobutylaluminum dichloride, isobutylaluminum sesquichloride, ethylaluminum dichloride (EADC), diethylaluminum chloride (DEAC), ethylaluminum sesquichloride (EASC), SiCl₄, SnCl₄, HCl, Cl₂, HSiCl₃, aluminium chloride, ethylboron dichloride, boron chloride, diethylboron chloride, HCCl₃, PCl₃, POCl₃, acetyl chlorides, thionyl chloride, sulfur chloride, methyl trichlorosilane, dimethyl dichlorosilane, TiCl₄, VCl₄, CCl₄, t-butylchloride, n-butyl chloride, chloroform, 1,1,1-trichloroethane, 1,1,2-trichloroethane, 1,2-dichloroethane and dichloromethane;
(g) maintaining the solid obtained in (f) at a temperature from 60°C to 120°C from 0.5 hour to 5 hours;
(h) washing the solid obtained in (g) with an inert organic solvent;
(i) optionally washing the solid obtained in (h) with a solution of one or more organometallic compounds of group 13 of the periodic table in an amount ranging from 0 to 3 g of the organometallic compound per g of the dry catalyst component obtained.

2. The process for obtaining a solid catalyst component according to claim 1, wherein the activated particulate silica used in step (a) is a microspheroidal, porous silica.

3. The process for obtaining a solid catalyst component according to claim 1 or 2, wherein the activated particulate silica used in step (a) has a surface area (B.E.T.) ranging from 250 to 500 m²/g.

4. The process for obtaining a solid catalyst component according to any one of claims 1 to 3, wherein the activated particulate silica used in step (a) has a pore volume (B.E.T.) ranging from 1.0 to 2.0 ml/g.

5. The process for obtaining a solid catalyst component according to claim 1, wherein the organometallic compounds of group 13 of the periodic table used in step (a) is trimethylaluminum, triethylaluminum (TEAL), methylaluminum dichloride, methylaluminum sesquichloride, isobutylaluminum dichloride, isobutylaluminum sesquichloride, ethylaluminum dichloride (EADC), diethylaluminum chloride (DEAC), ethylaluminum sesquichloride (EASC), tri-n-hexylaluminum (Tn-HAL) or tri-n-octylaluminum (TnOAL).

6. The process for obtaining a solid catalyst component according to claim 1, wherein the amount of the solution of organometallic compound of group 13 of the periodic table in step (a) ranges from 0.3 to 0.7 mmole of the organometallic solution per mmole of OH on the silica surface.

7. The process for obtaining a solid catalyst component according to claim 1, wherein the supernatant liquid from step (a) is removed by means of settling and siphoning, filtration or centrifugation.

8. The process for obtaining a solid catalyst component according to claim 1, wherein the magnesium compound used to prepare the solution of the step (c) is magnesium dichloride, magnesium diethylate, magnesium di-n-butylate, magnesium diisopropylate or magnesium diisobutylate.

9. The process for obtaining a solid catalyst component according to claim 1 or 8, wherein the magnesium compound used to prepare the solution of the step (c) is in an amount ranging from 0.0042 to 0.042 g of magnesium per g of silica.

10. The process for obtaining a solid catalyst component according to claim 1, wherein the titanium compound used to prepare the solution of the step (c) is titanium tetra-n-propylate, titanium tetra-n-butylate, titanium tetra-i-propylate, titanium tetra-i-butylate or the corresponding titanium mono- or di-chloroalkoxides.

11. The process for obtaining a solid catalyst component according to claim 1 or 10, wherein the titanium compound used to prepare the solution of the step (c) is in an amount ranging from 0.0175 to 0.175 g of titanium per g of silica.

12. The process for obtaining a solid catalyst component according to any one of claims 1, 9 and 11, wherein the molar ratio Ti/Mg used to prepare the solution of the, step (c) is comprised between 0.3 and 4.

13. The process for obtaining a solid catalyst component according to claim 1, wherein the reducing agent used in the step (e) is (CH₃)₃SiO-[(CH₃HSiO-]ₙSi(CH₃)₃, wherein n ranges between 5 and 100, (CH₃HSiO)₄, (CH₃HSiO)₃, H₃Si-O-SiH₂-OSiH₃ or phenylhydropolysiloxanes in which the hydrogen atoms can be partially replaced by methyl groups.

14. The process for obtaining a solid catalyst component according to claim 1 or 13, wherein the reducing agent used in the step (e) is in an amount ranging from 0 to 2 moles per mole of titanium.

15. The process for obtaining a solid catalyst component according to claim 14, wherein the reducing agent is in an amount ranging from 0 to 0.1 moles per mole of titanium.

16. The process for obtaining a solid catalyst component according to claim 1, wherein the halogenating agent is SiCl₄, SnCl₄, HCl, Cl₂, HSiCl₃, methyl trichlorosilane, dimethyl dichlorosilane, t-butyl chloride, n-butyl chloride, chloroform, 1,1,1-trichloroethane, 1,1,2-trichloroethane, 1,2-dichloroethane or dichloromethane.

17. The process for obtaining a solid catalyst component according to claim 16, wherein the halogenating agent is SiCl₄.

18. The process for obtaining a solid catalyst component according to any one of claims 1, 16 and 17, wherein the halogenating agent used in the step (f) is used in an amount ranging from 0.5 to 3 moles of halogenating agent per mole of titanium.

19. The process for obtaining a solid catalyst component according to claim 1, wherein the thermal treatment of the step (g) is conducted from 3 hours to 5 hours and at a temperature from 60°C to 75°C.

20. The process for obtaining a solid catalyst component according to claim 1, wherein the solid in step (h) is separated from the suspension by means of settling and siphoning, filtration or centrifugation.

21. The process for obtaining a solid catalyst component according to claim 1, wherein the amount of the solution of one or more organometallic compounds of group 13 of the periodic table used in step (i) ranges from 0.05 to 1 g of the organometallic compound per g of the dry catalyst component obtained.

22. The process for obtaining a solid catalyst component according to claim 1, wherein two different organometallic compounds are used in the step (i) to wash the solid obtained in step (h).

23. The process for obtaining a solid catalyst component according to claim 1 or 15, wherein the two different organometallic compounds in the step (i) are fed together, mixed in the same solution.

24. The process for obtaining a solid catalyst component according to claim 1 or 15, wherein the two different organometallic compounds in the step (i) are fed at the same time in individual solutions.

25. The process for obtaining a solid catalyst component according to claim 1 or 15, wherein the two different organometallic compounds in the step (i) are fed one after the other, in individual solutions.

26. The process for obtaining a solid catalyst component according to claim 1 or any one of claims 21 to 25, wherein the organometallic compound used in the step (i) is methylaluminum dichloride, methylaluminum sesquichloride, isobutylaluminum dichloride, isobutylaluminum sesquichloride, ethylaluminum dichloride (EADC), diethylaluminum chloride (DEAC), ethylaluminum sesquichloride (EASC), tri-n-hexylaluminum (Tn-HAL) or tri-n-octylaluminum (TnOAL).

27. The process for obtaining a solid catalyst component according to claim 1, wherein the inert organic solvent used is hexane, heptane, octane or isoparaffin.

28. A solid catalyst component for ethylene polymerization and copolymerization obtainable by the process as defined in any one of claims 1 to 27, wherein the solid catalyst component comprises a carrier of particulate silica and a catalytically active portion including 0.005 to 0.02 g of titanium per g of solid catalyst, 0.003 to 0.03 g of magnesium per g of solid catalyst, chlorine, alkoxy groups and at least one organometallic compound of group 13 of the periodic table in an amount ranging from 0.003 to 0.03 g of metal per g of solid catalyst.

## Patentansprüche

1. Verfahren zum Erhalt einer festen Katalysator-Komponente für die Ethylen-Polymerisation und -Copolymerisation, bei dem ein Träger aus teilchenförmigem Siliciumdioxid (65 bis 85 Gew.-%) mit einem katalytisch aktiven Teil (15 bis 35 Gew.-%) imprägniert wird, welcher Titan, Magnesium, Chlor, Alkoxygruppen und mindestens eine organometallische Verbindung der Gruppe 13 des Periodensystems einschließt, wobei das Verfahren die Schritte umfasst:
(a) Imprägnieren eines aktivierten teilchenförmigen Siliciumdioxids in Teilchen unter Verwendung einer Lösung einer organometallischen Verbindung der Gruppe 13 des Periodensystems in einer Menge, die im Bereich von 0,1 bis 1 mMol der organometallischen Lösung pro mMol OH an der Siliciumdioxid-Oberfläche liegt, in einem inerten organischen Lösungsmittel;
(b) Entfernen der überstehenden Flüssigkeit aus dem Schritt (a);
(c) Herstellen einer Lösung, die erhalten wird durch Umsetzen mindestens einer Magnesium-Verbindung, die aus Magnesiumhalogeniden und Magnesiumalkoholaten ausgewählt ist, in einer Menge, die im Bereich von 0,0024 bis 0,24 g Magnesium pro g Siliciumdioxid liegt, und mindestens einer Titan-Verbindung, die aus Titanalkoholaten und Titanhalogenalkoholaten ausgewählt ist, in einer Menge im Bereich von 0,01 bis 1 g Titan pro g Siliciumdioxid;
(d) Imprägnieren des in (b) erhaltenen Siliciumdioxids unter Verwendung der in (c) hergestellten Lösung;
(e) gegebenenfalls Umsetzen des in (d) erhaltenen Festkörpers mit einem Reduktionsmittel, das ausgewählt ist aus der Gruppe bestehend aus Na-Alkylen, Li-Alkylen, Zn-Alkylen, Mg-Alkylen und entsprechenden Aryl-Derivaten, Grignard-Verbindungen des Typs RMgX und Polyhydrosiloxanen, wobei R eine lineare oder verzweigte Alkylgruppe, die 1 bis 10 Kohlenstoffe enthält, oder Aryl-Derivate darstellt, und X ein Halogenatom darstellt, und Al-Alkylhalogenid- oder Siliciumverbindungen;
(f) Umsetzen des in (d) oder (e) erhaltenen Festkörpers mit einem Halogenierungsmittel, das ausgewählt ist aus der Gruppe bestehend aus Methylaluminiumdichlorid, Methylaluminiumsesquichlorid, Isobutylaluminiumdichlorid, Isobutylaluminiumsesquichlorid, Ethylaluminiumdichlorid (EADC), Diethylaluminiumchlorid (DEAC), Ethylaluminiumsesquichlorid (EASC), SiCl₄, SnCl₄, HCl, Cl₂, HSiCl₃, Aluminiumchlorid, Ethylbordichlorid, Borchlorid, Diethylborchlorid, HCCl₃, PCl₃, POCl₃, Acetylchloriden, Thionylchlorid, Schwefelchlorid, Methyltrichlorsilan, Dimethyldichlorsilan, TiCl₄, VCl₄, CCl₄, t-Butylchlorid, n-Butylchlorid, Chloroform, 1,1,1-Trichlorethan, 1,1,2-Trichlorethan, 1,2-Dichlorethan und Dichlormethan;
(g) Halten des in (f) erhaltenen Festkörpers bei einer Temperatur von 60 °C bis 120 °C für 0,5 Stunden bis 5 Stunden;
(h) Waschen des in (g) erhaltenen Festkörpers mit einem inerten organischen Lösungsmittel;
(i) gegebenenfalls Waschen des in (h) erhaltenen Festkörpers mit einer Lösung einer oder mehrerer organometallischer Verbindungen der Gruppe 13 des Periodensystems in einer Menge, die im Bereich von 0 bis 3 g der organometallischen Verbindung pro g der erhaltenen trockenen Katalysator-Komponente liegt.

2. Verfahren zum Erhalt einer festen Katalysator-Komponente nach Anspruch 1, bei dem das im Schritt (a) verwendete aktivierte teilchenförmige Siliciumdioxid ein mikrosphäroidisches poröses Siliciumdioxid ist.

3. Verfahren zum Erhalt einer festen Katalysator-Komponente nach Anspruch 1 oder 2, bei dem das im Schritt (a) verwendete aktivierte teilchenförmige Siliciumdioxid eine Oberfläche (B.E.T.) im Bereich von 250 bis 500 m²/g aufweist.

4. Verfahren zum Erhalt einer festen Katalysator-Komponente nach irgendeinem der Ansprüche 1 bis 3, bei dem das im Schritt (a) verwendete aktivierte teilchenförmige Siliciumdioxid ein Porenvolumen (B.E.T.) im Bereich von 1,0 bis 2,0 ml/g aufweist.

5. Verfahren zum Erhalt einer festen Katalysator-Komponente nach Anspruch 1, bei dem die im Schritt (a) verwendeten organometallischen Verbindungen der Gruppe 13 des Periodensystems Trimethylaluminium, Triethylaluminium (TEAL), Methylaluminiumdichlorid, Methylaluminiumsesquichlorid, Isobutylaluminiumdichlorid, Isobutylaluminiumsesquichlorid, Ethylaluminiumdichlorid (EADC), Diethylaluminiumchlorid (DEAC), Ethylaluminiumsesquichlorid (EASC), Tri-n-hexylaluminium (Tn-HAL) oder Tri-n-octylaluminium (TnOAL) sind.

6. Verfahren zum Erhalt einer festen Katalysator-Komponente nach Anspruch 1, bei dem die Menge der Lösung der organometallischen Verbindung der Gruppe 13 des Periodensystems im Schritt (a) im Bereich von 0,3 bis 0,7 mMol der organometallischen Lösung pro mMol OH auf der Siliciumdioxid-Oberfläche liegt.

7. Verfahren zum Erhalt einer festen Katalysator-Komponente nach Anspruch 1, bei dem die überstehende Flüssigkeit aus Schritt (a) mittels Absetzen und Abhebern, Filtration oder Zentrifugation entfernt wird.

8. Verfahren zum Erhalt einer festen Katalysator-Komponente nach Anspruch 1, bei dem die Magnesium-Verbindung, die zur Herstellung der Lösung des Schritts (c) verwendet wird, Magnesiumdichlorid, Magnesiumdiethylat, Magnesiumdi-n-butylat, Magnesiumdiisopropylat oder Magnesiumdiisobutylat ist.

9. Verfahren zum Erhalt einer festen Katalysator-Komponente nach Anspruch 1 oder 8, bei dem die Magnesium-Verbindung, die zur Herstellung der Lösung des Schritts (c) verwendet wird, in einer Menge im Bereich von 0,0042 bis 0,042 g Magnesium pro g Siliciumdioxid vorliegt.

10. Verfahren zum Erhalt einer festen Katalysator-Komponente nach Anspruch 1, bei dem die Titan-Verbindung, die zur Herstellung der Lösung des Schritts (c) verwendet wird, Titantetra-n-propylat, Titantetra-n-butylat, Titantetra-i-propylat, Titantetra-i-butylat oder die entsprechenden Titanmono- oder -dichloralkoholate ist.

11. Verfahren zum Erhalt einer festen Katalysator-Komponente nach Anspruch 1 oder 10, bei dem die Titan-Verbindung, die zur Herstellung der Lösung des Schritts (c) verwendet wird, in einer Menge im Bereich von 0,0175 bis 0,175 g Titan pro g Siliciumdioxid vorliegt.

12. Verfahren zum Erhalt einer festen Katalysator-Komponente nach irgendeinem der Ansprüche 1, 9 und 11, bei dem das Molverhältnis Ti/Mg, das zur Herstellung der Lösung des Schritts (c) verwendet wird, zwischen 0,3 und 0,4 eingeschlossen ist.

13. Verfahren zum Erhalt einer festen Katalysator-Komponente nach Anspruch 1, bei dem das im Schritt (e) verwendete Reduktionsmittel (CH₃)₃SiO-[(CH₃HSiO-]ₙSi(CH₃)₃, worin n im Bereich zwischen 5 und 100 liegt, (CH₃HSiO)₄, (CH₃HSiO)₃, H₃Si-O-SiH₂-OSiH₃ oder Phenylhydropolysiloxane ist, worin die Wasserstoffatome teilweise durch Methylgruppen ersetzt sein können.

14. Verfahren zum Erhalt einer festen Katalysator-Komponente nach Anspruch 1 oder 13, bei dem das im Schritt (e) verwendete Reduktionsmittel in einer Menge im Bereich von 0 bis 2 Mol pro Mol Titan vorliegt.

15. Verfahren zum Erhalt einer festen Katalysator-Komponente nach Anspruch 14, bei dem das Reduktionsmittel in einer Menge im Bereich von 0 bis 0,1 Mol pro Mol Titan vorliegt.

16. Verfahren zum Erhalt einer festen Katalysator-Komponente nach Anspruch 1, bei dem das Halogenierungsmittel SiCl₄, SnCl₄, HCl, Cl₂, HSiCl₃, Methyltrichlorsilan, Dimethyldichlorsilan, t-Butylchlorid, n-Butylchlorid, Chloroform, 1,1,1-Trichlorethan, 1,1,2-Trichlorethan, 1,2-Dichlorethan oder Dichlormethan ist.

17. Verfahren zum Erhalt einer festen Katalysator-Komponente nach Anspruch 16, bei dem das Halogenierungsmittel SiCl₄ ist.

18. Verfahren zum Erhalt einer festen Katalysator-Komponente nach irgendeinem der Ansprüche 1, 16 und 17, bei dem das im Schritt (f) verwendete Halogenierungsmittel in einer Menge im Bereich von 0,5 bis 3 Mol Halogenierungsmittel pro Mol Titan vorliegt.

19. Verfahren zum Erhalt einer festen Katalysator-Komponente nach Anspruch 1, bei dem die Wärmebehandlung des Schritts (g) 3 Stunden bis 5 Stunden und bei einer Temperatur von 60 °C bis 75 °C durchgeführt wird.

20. Verfahren zum Erhalt einer festen Katalysator-Komponente nach Anspruch 1, bei dem der Festkörper im Schritt (h) mittels Absetzen und Abhebern, Filtration oder Zentrifugation aus der Suspension abgetrennt wird.

21. Verfahren zum Erhalt einer festen Katalysator-Komponente nach Anspruch 1, bei dem die Menge der im Schritt (i) verwendeten Lösung einer oder mehrerer organometallischer Verbindungen der Gruppe 13 des Periodensystems im Bereich von 0,05 bis 1 g der organometallischen Verbindung pro g der erhaltenen trockenen Katalysator-Komponente liegt.

22. Verfahren zum Erhalt einer festen Katalysator-Komponente nach Anspruch 1, bei dem im Schritt (i) zwei verschiedene organometallische Verbindungen verwendet werden, um den im Schritt (h) erhaltenen Festkörper zu waschen.

23. Verfahren zum Erhalt einer festen Katalysator-Komponente nach Anspruch 1 oder 15, bei dem die zwei verschiedenen organometallischen Verbindungen im Schritt (i) zusammen in derselben Lösung gemischt zugeführt werden.

24. Verfahren zum Erhalt einer festen Katalysator-Komponente nach Anspruch 1 oder 15, bei dem die zwei verschiedenen organometallischen Verbindungen im Schritt (i) gleichzeitig in individuellen Lösungen zugeführt werden.

25. Verfahren zum Erhalt einer festen Katalysator-Komponente nach Anspruch 1 oder 15, bei dem die zwei verschiedenen organometallischen Verbindungen im Schritt (i) nacheinander in individuellen Lösung zugeführt werden.

26. Verfahren zum Erhalt einer festen Katalysator-Komponente nach Anspruch 1 oder irgendeinem der Ansprüche 21 bis 25, bei dem die im Schritt (i) verwendete organometallische Verbindung Methylaluminiumdichlorid, Methylaluminiumsesquichlorid, Isobutylaluminiumdichlorid, lsobutylaluminiumsesquichlorid, Ethylaluminiumdichlorid (EADC), Diethylaluminiumchlorid (DEAC), Ethylaluminiumsesquichlorid (EASC), Tri-n-hexylaluminium (Tn-HAL) oder Tri-n-octylaluminium (TnOAL) ist.

27. Verfahren zum Erhalt einer festen Katalysator-Komponente nach Anspruch 1, bei dem das verwendete inerte organische Lösungsmittel Hexan, Heptan, Octan oder Isoparaffin ist.

28. Feste Katalysator-Komponente für die Ethylen-Polymerisation und -Copolymerisation, erhältlich durch das Verfahren wie in irgendeinem der Ansprüche 1 bis 27 definiert, wobei die feste Katalysator-Komponente einen Träger aus teilchenförmigem Siliciumdioxid und einen katalytisch aktiven Teil umfasst, der 0,005 bis 0,02 g Titan pro g festen Katalysator, 0,003 bis 0,03 Magnesium pro g festen Katalysator, Chlor, Alkoxygruppen und mindestens eine organometallische Verbindung der Gruppe 13 des Periodensystems in einer Menge im Bereich von 0,003 bis 0,03 g Metall pro g festen Katalysator einschließt.

## Revendications

1. Procédé d'obtention d'un composant catalyseur solide pour une polymérisation et une copolymérisation d'éthylène, dans lequel un support de silice particulaire (65 à 85 % en poids) est imprégné avec une partie catalytiquement active (15 à 35 % en poids) incluant du titane, du magnésium, du chlore, des groupes alcoxy et au moins un composé organométallique du groupe 13 du tableau périodique, le procédé comprenant les étapes de :
(a) imprégnation d'une silice particulaire activée dans des particules en utilisant une solution d'un composé organométallique du groupe 13 du tableau périodique dans une quantité dans la plage de 0,1 à 1 mmole de la solution d'organométallique par mmole de OH sur la surface de la silice, dans un solvant organique inerte ;
(b) élimination du liquide surnageant de l'étape (a) ;
(c) préparation d'une solution obtenue par réaction d'au moins un composé de magnésium, choisi parmi des halogénures de magnésium et des alcoxydes de magnésium, dans une quantité dans la plage de 0,0024 à 0,24 g de magnésium par g de silice, et au moins un composé de titane, choisi parmi des alcoxydes de titane et des alcoxydes de titane-halogène, dans une quantité dans la plage de 0,01 à 1 g de titane par g de silice ;
(d) imprégnation de la silice obtenue en (b) en utilisant la solution préparée en (c) ;
(e) facultativement, réaction du solide obtenu en (d) avec un agent réducteur choisi parmi le groupe consistant en des Na-alkyles, des Li-alkyles, des Zn-alkyles, des Mg-alkyles et des dérivés aryle correspondants, des composés de Grignard du type RMgX et polyhydrosiloxanes, où R représente un groupe alkyle linéaire ou ramifié, contenant de 1 à 10 carbones ou des dérivés aryle et X représente un atome d'halogène, un halogénure d'Al-alkyle ou des composés de silicium ;
(f) réaction du solide obtenu en (d) ou (e) avec un agent d'halogénation choisi parmi le groupe consistant en le dichlorure de méthylaluminium, le sesquichlorure de méthylaluminium, le dichlorure d'isobutylaluminium, le sesquichlorure d'isobutylaluminium, le dichlorure d'éthylaluminium (EADC), le chlorure de diéthylaluminium (DEAC), le sesquichlorure d'éthylaluminium (EASC), SiCl₄, SnCl₄, HCl, Cl₂, HSiCl₃, le chlorure d'aluminium, le dichlorure d'éthylbore, le chlorure de bore, le chlorure de diéthylbore, HCCl₃, PCl₃, POCl₃, des chlorures d'acétyle, le chlorure de thionyle, le chlorure de soufre, le méthyltrichlorosilane, le diméthyldichlorosilane, TiCl₄, VCl₄, CCl₄, le chlorure de t-butyle, le chlorure de n-butyle, le chloroforme, le 1,1,1-trichloroéthane, le 1,1,2-trichloroéthane, le 1,2-dichloroéthane et le dichlorométhane ;
(g) maintien du solide obtenu en (f) à une température de 60 °C à 120 °C de 0,5 heure à 5 heures ;
(h) lavage du solide obtenu en (g) avec un solvant organique inerte ;
(i) facultativement, lavage du solide obtenu en (h) avec une solution d'un ou plusieurs composé(s) organométallique(s) du groupe 13 du tableau périodique dans une quantité dans la plage de 0 à 3 g du composé organométallique par g du composant catalyseur sec obtenu.

2. Procédé d'obtention d'un composant catalyseur solide selon la revendication 1, dans lequel la silice particulaire activée utilisée à l'étape (a) est une silice poreuse microsphéroïdale.

3. Procédé d'obtention d'un composant catalyseur solide selon la revendication 1 ou 2, dans lequel la silice particulaire activée utilisée à l'étape (a) a une superficie (B.E.T.) dans la plage de 250 à 500 m²/g.

4. Procédé d'obtention d'un composant catalyseur solide selon l'une quelconque des revendications 1 à 3, dans lequel la silice particulaire activée utilisée à l'étape (a) a un volume de pores (B.E.T.) dans la plage de 1,0 à 2,0 ml/g.

5. Procédé d'obtention d'un composant catalyseur solide selon la revendication 1, dans lequel le composé organométallique du groupe 13 du tableau périodique utilisé à l'étape (a) est le triméthylaluminium, le triéthylaluminium (TEAL), le dichlorure de méthylaluminium, le sesquichlorure de méthylaluminium, le dichlorure d'isobutylaluminium, le sesquichlorure d'isobutylaluminium, le dichlorure d'éthylaluminium (EADC), le chlorure de diéthylaluminium (DEAC), le sesquichlorure d'éthylaluminium (EASC), le tri-n-hexylaluminium (Tn-HAL) ou le tri-n-octylaluminium (Tn-OAL).

6. Procédé d'obtention d'un composant catalyseur solide selon la revendication 1, dans lequel la quantité de la solution de composé organométallique du groupe 13 du tableau périodique à l'étape (a) est dans la plage de 0,3 à 0,7 mmole de la solution d'organométallique par mmole de OH sur la surface de la silice.

7. Procédé d'obtention d'un composant catalyseur solide selon la revendication 1, dans lequel le liquide surnageant de l'étape (a) est éliminé au moyen d'un dépôt et d'un siphonage, d'une filtration ou d'une centrifugation.

8. Procédé d'obtention d'un composant catalyseur solide selon la revendication 1, dans lequel le composé de magnésium utilisé pour préparer la solution de l'étape (c) est le dichlorure de magnésium, le diéthylate de magnésium, le di-n-butylate de magnésium, le diisopropylate de magnésium ou le diisobutylate de magnésium.

9. Procédé d'obtention d'un composant catalyseur solide selon la revendication 1 ou 8, dans lequel le composé de magnésium utilisé pour préparer la solution de l'étape (c) est dans une quantité dans la plage de 0,0042 à 0,042 g de magnésium par g de silice.

10. Procédé d'obtention d'un composant catalyseur solide selon la revendication 1, dans lequel le composé de titane utilisé pour préparer la solution de l'étape (c) est le tétra-n-propylate de titane, le tétra-n-butylate de titane, le tétra-i-propylate de titane, le tétra-i-butylate de titane ou les mono ou dichloroalcoxydes de titane correspondants.

11. Procédé d'obtention d'un composant catalyseur solide selon la revendication 1 ou 10, dans lequel le composé de titane utilisé pour préparer la solution de l'étape (c) est dans une quantité dans la plage de 0,0175 à 0,175 g de titane par g de silice.

12. Procédé d'obtention d'un composant catalyseur solide selon l'une quelconque des revendications 1, 9 et 11, dans lequel le rapport molaire Ti/Mg utilisé pour préparer la solution de l'étape (c) est compris entre 0,3 et 4.

13. Procédé d'obtention d'un composant catalyseur solide selon la revendication 1, dans lequel l'agent réducteur utilisé à l'étape (e) est (CH₃)₃SiO-[(CH₃HSiO-]ₙSi(CH₃)₃, où n est dans la plage entre 5 et 100, (CH₃HSiO)₄, (CH₃HSiO)₃, H₃Si-O-SiH₂-OSiH₃ ou des phénylhydropolysiloxanes dans lesquels les atomes d'hydrogène peuvent être partiellement remplacés par des groupes méthyle.

14. Procédé d'obtention d'un composant catalyseur solide selon la revendication 1 ou 13, dans lequel l'agent réducteur utilisé à l'étape (e) est dans une quantité dans la plage de 0 à 2 moles par mole de titane.

15. Procédé d'obtention d'un composant catalyseur solide selon la revendication 14, dans lequel l'agent réducteur est dans une quantité dans la plage de 0 à 0,1 mole par mole de titane.

16. Procédé d'obtention d'un composant catalyseur solide selon la revendication 1, dans lequel l'agent d'halogénation est SiCl₄, SnCl₄, HCl, Cl₂, HSiCl₃, le méthyltrichlorosilane, le diméthyldichlorosilane, le chlorure de t-butyle, le chlorure de n-butyle, le chloroforme, le 1,1,1-trichloroéthane, le 1,1,2-trichloroéthane, le 1,2-dichloroéthane ou le dichlorométhane.

17. Procédé d'obtention d'un composant catalyseur solide selon la revendication 16, dans lequel l'agent d'halogénation est SiCl₄.

18. Procédé d'obtention d'un composant catalyseur solide selon l'une quelconque des revendications 1, 16 et 17, dans lequel l'agent d'halogénation utilisé à l'étape (f) est utilisé dans une quantité dans la plage de 0,5 à 3 moles d'agent d'halogénation par mole de titane.

19. Procédé d'obtention d'un composant catalyseur solide selon la revendication 1, dans lequel le traitement thermique de l'étape (g) est conduit pendant 3 heures à 5 heures et à une température de 60 °C à 75 °C.

20. Procédé d'obtention d'un composant catalyseur solide selon la revendication 1, dans lequel le solide à l'étape (h) est séparé de la suspension au moyen d'un dépôt et d'un siphonage, d'une filtration ou d'une centrifugation.

21. Procédé d'obtention d'un composant catalyseur solide selon la revendication 1, dans lequel la quantité de la solution d'un ou plusieurs composé(s) organométallique(s) du groupe 13 du tableau périodique utilisée à l'étape (i) est dans la plage de 0,05 à 1 g du composé organométallique par g du composant catalyseur sec obtenu.

22. Procédé d'obtention d'un composant catalyseur solide selon la revendication 1, dans lequel deux composés organométalliques différents sont utilisés à l'étape (i) pour laver le solide obtenu à l'étape (h).

23. Procédé d'obtention d'un composant catalyseur solide selon la revendication 1 ou 15, dans lequel les deux composés organométalliques différents à l'étape (i) sont alimentés ensemble, mélangés dans la même solution.

24. Procédé d'obtention d'un composant catalyseur solide selon la revendication 1 ou 15, dans lequel les deux composés organométalliques différents à l'étape (i) sont alimentés en même temps dans des solutions individuelles.

25. Procédé d'obtention d'un composant catalyseur solide selon la revendication 1 ou 15, dans lequel les deux composés organométalliques différents à l'étape (i) sont alimentés l'un après l'autre, dans des solutions individuelles.

26. Procédé d'obtention d'un composant catalyseur solide selon la revendication 1 ou l'une quelconque des revendications 21 à 25, dans lequel le composé organométallique utilisé à l'étape (i) est le dichlorure de méthylaluminium, le sesquichlorure de méthylaluminium, le dichlorure d'isobutylaluminium, le sesquichlorure d'isobutylaluminium, le dichlorure d'éthylaluminium (EADC), le chlorure de diéthylaluminium (DEAC), le sesquichlorure d'éthylaluminium (EASC), le tri-n-hexylaluminium (Tn-HAL) ou le tri-n-octylaluminium (Tn-OAL).

27. Procédé d'obtention d'un composant catalyseur solide selon la revendication 1, dans lequel le solvant organique inerte utilisé est l'hexane, l'heptane, l'octane ou une isoparaffine.

28. Composant catalyseur solide pour une polymérisation et une copolymérisation d'éthylène pouvant être obtenu par le procédé selon l'une quelconque des revendications 1 à 27, dans lequel le composant catalyseur solide comprend un support de silice particulaire et une partie catalytiquement active incluant 0,005 à 0,02 g de titane par g de catalyseur solide, 0,003 à 0,03 g de magnésium par g de catalyseur solide, du chlore, des groupes alcoxy et au moins un composé organométallique du groupe 13 du tableau périodique dans une quantité dans la plage de 0,003 à 0,03 g de métal par g de catalyseur solide.
